# EUROPÄISCHE PATENTSCHRIFT

(11) **EP 2 052 478 B1**
(45) Veröffentlichungstag und Bekanntmachung des Hinweises auf die Patenterteilung: **10.04.2013**
(21) Anmeldenummer: 07802490.8
(22) Anmeldetag: 03.08.2007
(51) Int. Cl.: H04B 10/29

(54) **OPTISCHER REGENERATOR UND PHASENFEHLERERMITTLUNGSEINHEIT FÜR EINEN OPTISCHEN REGENERATOR SOWIE VERFAHREN ZUR OPTISCHEN REGENERATION**
OPTICAL REGENERATOR AND PHASE ERROR DETECTION UNIT FOR AN OPTICAL REGENERATOR AND METHOD FOR OPTICAL REGENERATION
RÉGÉNÉRATEUR OPTIQUE ET UNITÉ DE DÉTERMINATION D'ERREUR DE PHASE POUR UN RÉGÉNÉRATEUR OPTIQUE AINSI QUE PROCÉDÉ DE RÉGÉNÉRATION OPTIQUE

(30) Priorität: 07.08.2006 DE 102006036817
(43) Veröffentlichungstag der Anmeldung: 29.04.2009
(73) Patentinhaber: Nokia Siemens Networks GmbH & Co. KG, 81541 München (DE)
(72) Erfinder: GOTTWALD, Erich, 83607 Holzkirchen (DE); OSTER, Beate, 76187 Karlsruhe (DE)
(74) Vertreter: Bruglachner, Thomas E.
(86) Internationale Anmeldenummer: PCT/EP2007/058065
(87) Internationale Veröffentlichungsnummer: WO 2008/017642

(56) Entgegenhaltungen:
- JOHANNISSON P ET AL: "SUPPRESSION OF PHASE ERROR IN DIFFERENTIAL PHASE-SHIFT KEYING DATA BY AMPLITUDE REGNERATION" OPTICS LETTERS, OSA, OPTICAL SOCIETY OF AMERICA, WASHINGTON, DC, US, Bd. 31, Nr. 10, 15. Mai 2006 (2006-05-15), Seiten 1385-1387, XP001242764 ISSN: 0146-9592
- SHIN M ET AL: "SNR improvement of DPSK signals in a semiconductor optical regenerative amplifier" IEEE PHOTONICS TECHNOLOGY LETTERS, Bd. 18, Nr. 1, 1. Januar 2006 (2006-01-01), - 1. Januar 2006 (2006-01-01) Seiten 49-51, XP002455596 USA
- CVECEK K ET AL: "NOLM-Based RZ-DPSK Signal Regeneration" IEEE PHOTONICS TECHNOLOGY LETTERS, IEEE SERVICE CENTER, PISCATAWAY, NJ, US, Bd. 17, Nr. 3, März 2005 (2005-03), Seiten 639-641, XP011126977 ISSN: 1041-1135 in der Anmeldung erwähnt

## Beschreibung

Die Erfindung betrifft einen optischen Regenerator nach dem Oberbegriff des Patentanspruchs 1, eine Phasenfehlerermittlungseinheit für einen optischen Regenerator und ein Verfahren zur optischen Regeneration nach dem Oberbegriff des Patentanspruchs 21.

In großen optischen Transportnetzen mit Wellenlängen-Multiplex-Betrieb (engl. "wavelength division multiplex", abgekürzt DWDM) treten optische Verbindungsstrecken (engl. "links") auf, die ohne Regeneration des Datensignals nicht überbrückt werden können. Üblicherweise werden zur Regeneration der optischen Datensignale opto-elektronische Regeneratoren eingesetzt, in denen das optische Datensignal in ein elektronisches Signal gewandelt, verstärkt und regeneriert und anschließend wieder in einer Sendereinheit in ein optisches Signal umgewandelt wird. Bei sehr hohen Kanaldatenraten, beispielsweise 40 Gb/s oder bei zukünftigem 100 Gb E-thernet sind diese herkömmlichen Regeneratoren sehr kostenaufwendig und es bietet sich alternativ der Einsatz reinoptischer Regeneratorkonzepte an. Ferner sind mit zunehmender Datenrate die regeneratorfrei möglichen Reichweiten oft deutlich geringer als die maximal im Netz auftretenden Streckenlängen. Bei einer Datenrate von 40 Gb/s liegen die Reichweiten zwischen 300 und 1500 km, bei einer Datenrate von 100 Gb/s betragen die Reichweiten derzeit deutlich weniger als 300 km, so dass in solchen Netzen das Datensignal in einer Verbindungsstrecke gegebenenfalls mehrmals regeneriert werden muss.

Höhere Reichweiten werden unter anderem durch den Einsatz fortgeschrittener Modulationsformate wie der differentiellen Phasenmodulation (engl. "differential phase shift keying", abgekürzt DPSK) erreicht. Phasenmodulierte Signale besitzen typischerweise eine konstante oder eine im Symboltakt gepulste optische Leistung und daher eine potentiell geringere Empfindlichkeit gegen Nichtlinearitäten der Faser. Zweistufig differenzphasenmodulierte Datensignale weisen im Vergleich zu herkömmlichen Modulationsformaten eine verbesserte Dispersionstoleranz auf. Darüber hinaus zeigen vierstufig differenzphasenmodulierte Datensignale eine hohe spektrale Effizienz, was bedeutet, dass im Vergleich zu zweistufig modulierten Signalen innerhalb eines optischen Wellenlängenintervalls die doppelte Informationsmenge pro Zeiteinheit übertragen werden kann. Allerdings treten auch bei differenzphasenmodulierten Datensignalen Störungen in Amplitude und Phase aufgrund von Vierwellenmischung zwischen den Kanälen und aufgrund von Kreuzphasenmodulation auf. Des Weiteren werden Phasenfehler durch nichtlineare Wechselwirkungen zwischen dem Datensignal und der verstärkten spontanen Emission der optischen Verstärker verursacht. Daraus ergibt sich auch für differenzphasenmodulierte Datensignale ein Bedarf von Regeneratoren, die Verzerrungen oder Störungen des Datensignals beheben.

Aus der Veröffentlichung von A. G. Striegler et al. "NOLM-Based RZ-DPSK signal regeneration" IEEE Photonics Technology Letters, Vol. 17, No.3 vom März 2005 ist ein Regenerator bekannt, der einen nichtlinearen optischen Faserschleifenspiegel (engl. "nonlinear optical loop mirror", abgekürzt NOLM) mit einem Richtungsabschwächer aufweist. Darin wird ein "return-to-zero" differenzphasenmoduliertes (RZ-DPSK) Eingangssignal in einen Koppler mit einem Aufteilungsverhältnis von annähernd 95:5 eingespeist und aufgeteilt. Die beiden Teilsignale unterschiedlicher Amplitude durchlaufen die Faserschleife gegenläufig und erfahren aufgrund der Selbstphasenmodulation in der hoch-nichtlinearen NOLM-Faser unterschiedliche Phasenverschiebungen, was zu einer nichtlinearen Transmissionskennline führt. Durch das Einfügen eines Richtungsabschwächers innerhalb der Faserschleife wird erreicht, dass die Amplitudenschwankungen des Signals am Ausgang des Faserspiegels stark reduziert sind, während die Phasenlage jedes einzelnen Symbols des DPSK-Signals erhalten bleibt. Dies bedeutet, dass Phasenfehler einzelner Symbole des Datensignals durch den NOLM-Aufbau nicht behoben werden.

Aus der Veröffentlichung P.Johannisson "Suppression of phase error in differential phase- shift keying data by amplitude regeneration", Optics Letters, Vol.31, No.10 vom 15 Mai 2006 ist ein anderes Beispiel für einen Regenerator bekannt.

Es ist die Aufgabe der vorliegenden Erfindung, einen optischen Regenerator anzugeben, der für differenzphasenmodulierte Datensignale eine Korrektur von Phasenfehlern erlaubt.

Diese Aufgabe wird durch einen in Anspruch 1 angegebenen optischen Regenerator, durch eine in Anspruch 15 angegebene Phasenfehlerermittlungseinheit sowie ein in Anspruch 21 angegebenes Verfahren zur optischen Regeneration gelöst.

Erfindungsgemäß wird ein optischer Regenerator für ein differenzphasenmoduliertes Datensignal vorgeschlagen, der neben einer Einheit zur bitweisen Pegelnivellierung eine Einheit zur Regeneration der Phase der einzelnen Symbole des differenzphasenmodulierten Datensignals umfasst. Nach der Pegelnivellierung wird das in seiner Amplitude eingestellte Datensignal in ein erstes und ein zweites Datensignal aufgeteilt. Für das erste Datensignal werden in einer Phasenfehlerermittlungseinheit die Phasenfehler der einzelnen Symbole ermittelt, in ein Korrektursignal umgewandelt und einer Einheit zur Korrektur der Phasenfehler zugeführt. Das zweite Datensignal wird in der Einheit zur Korrektur der Phasenfehler in Abhängigkeit von dem zugeführten Korrektursignal in seiner Phase korrigiert, so dass am Ausgang der Korrektureinheit ein in seiner Amplitude und in seiner Phase regeneriertes differenzphasenmoduliertes Datensignal abgegeben wird.

Durch den Einsatz der erfindungsgemäßen Regeneration lassen sich die Reichweiten in einem optischen Transportnetz deutlich vergrößern, so dass gegebenenfalls ein elektro-optischer Regenerator nicht mehr notwendig ist. Ferner ist der Einsatz von rein-optischen Regeneratoren insbesondere für Datenraten von 40 und mehr Gb/s mit erheblichen Kostenvorteilen verbunden. Da die Regeneration rein optisch erfolgt, ist keine Hochfrequenz-Elektronik notwendig. Ferner ist die erfindungs-gemäße Anordnung tolerant gegen eine Variation der Datenrate aufgrund unterschiedlicher Fehlerkorrekturverfahren.

In einer vorteilhaften Ausführungsvariante wird das Korrektursignal in der Phasenfehlerermittlungseinheit dadurch erzeugt, dass der Phasenfehler in einen Amplitudenwert umgewandelt wird. Die Phasenfehlerermittlungseinheit weist eine Kennlinie zwischen einem Phasen- und einem Amplitudenwert mit mindestens einem linearen Bereich auf, so dass für unterschiedliche Symbole des Datensignals eine gleiche Steigung der Kennlinie gegeben ist. Dies ist insbesondere für zweistufige differenzphasenmodulierte Datensignale notwendig, da unabhängig vom Symbol von 0 oder π die gleiche, in ihrem Vorzeichen korrekte Konversion des Phasenfehlers in einen Amplitudenwert erfolgen muss.

Die zur Ermittlung des Phasenfehlers einzelner Symbole eingesetzte Konversion von einem Phasenwert in einen Amplitudenwert kann mittels einer interferometrischen Anordnung erfolgen. Diese kann vorteilhaft intergriert-optisch hergestellt werden, was zur Kompaktheit des gesamten Regenerators beiträgt.

Eine vorteilhafte Realisierungsvariante der Phasenfehlerermittlungseinheit stellt eine Parallelschaltung aus einem ersten Interferometer und einem in seiner Kennlinie um eine Phasendifferenz π/2 verschobenes zweites Interferometer dar. Das erste Interferometer dient zur Ermittlung der Phasenfehler. Das zweite Interferometer dient zur Detektion der Symbole. In Abhängigkeit vom detektierten Symbol wird über einen optisch steuerbaren Phasenschieber erreicht, dass für unterschiedliche Symbole des Datensignals im ersten Interferometer der gleiche Arbeitsbereich oder ein um 2nπ verschobener Arbeitsbereich eingestellt wird.

Nachdem der Phasenfehler der einzelnen Symbole ermittelt wurde, werden die Phasen dieser Symbole in der Einheit zur Phasenkorrektur korrigiert. Dazu werden vorteilhaft nichtlineare Medien eingesetzt, in denen in Abhängigkeit von der Amplitude des Korrektursignals die Phase des zweiten Datensignals eingestellt wird. Dies birgt insbesondere den Vorteil, dass Datensignale mit sehr hohen Datenraten von mehr als 40 Gb/s korrigiert werden können, da der genutzte Kerr-Effekt sehr schnell in Zeitbereichen von fs abläuft.

In einer Ausführungsvariante enthält die Einheit zur Phasenkorrektur einen Halbleiterverstärker. Hier wird die Kreuzphasenmodulation zwischen dem Datensignal und dem gegenläufigen Korrektursignal zur Phasenverschiebung ausgenutzt, was den Vorteil hat, dass zur Aufprägung des Korrektursignals auf das Datensignal keine zusätzliche Lichtquelle notwendig ist.

In einer anderen Ausführungsvariante wird in der Einheit zu Phasenkorrektur die Selbstphasenmodulation ausgenutzt. Dies hat den Vorteil, dass man als Korrektureinheit direkt die Übertragungsfaser oder eine hochnitlineare Glasfaser verwenden kann.

Weitere vorteilhafte Ausgestaltungen der Erfindung sind Gegenstand von Unteransprüchen und der Ausführungsbeispiele.

Die Erfindung wird nun anhand von Ausführungsbeispielen unter Zuhilfenahme der Figuren erläutert.

Es zeigen
- Fig. 1: ein Blockschaltbild einer ersten Ausführungsvariante des erfindungsgemäßen optischen Regenerators
- Fig. 2: ein Blockschaltbild einer Phasenfehlerermittlungseinheit und zugehörige Kennlinien
- Fig. 3: ein Blockschaltbild einer zweiten Ausführungsvariante des erfindungsgemäßen optischen Regenerators

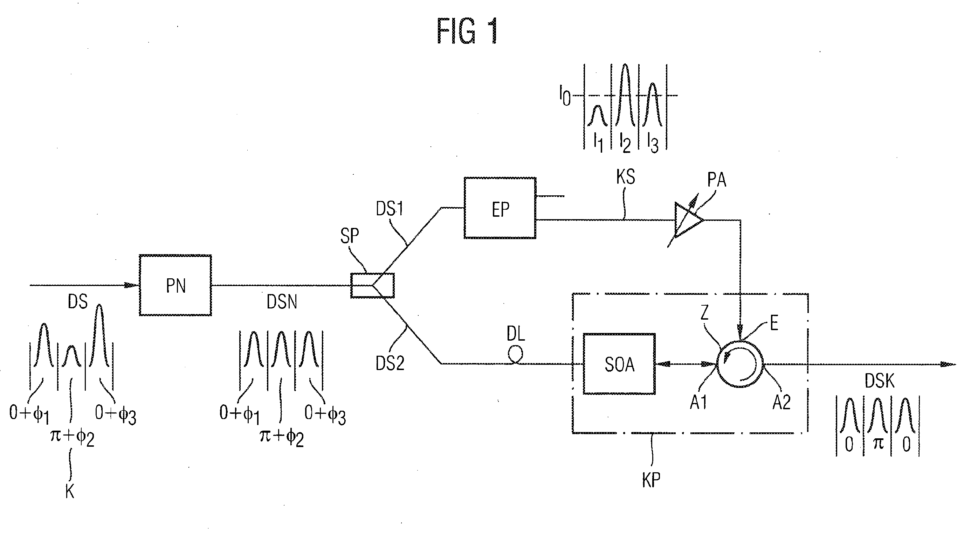

In Fig.1 ist eine erste Ausführungsvariante des erfindungsgemäßen optischen Regenerators gezeigt. An einigen Stellen des Blockschaltbilds sind zur Verdeutlichung zwischen den Funktionsblöcken skizzenhaft einzelne Datensignale dargestellt. Ein Datensignal DS wird dem Eingang des optischen Regenerators zugeführt. In diesem Ausführungsbeispiel ist als Eingangssignal ein "return-to-zero" differenzphasenmoduliertes (RZ DPSK) Datensignal gewählt. Der Einsatz von "non-return-to-zero" differenzphasenmodulierten (NRZ DPSK) Datensignalen oder anderen phasenmodulierten Datensignalen mit konstanter Leistung ist gleichermaßen möglich. Ein RZ DPSK Datensignal besteht aus einzelnen Impulsen, die eine zeitliche Breite kleiner als die Bitdauer aufweisen. Ein einzelner Impuls wird hier auch als Symbol bezeichnet. Eine binäre Datenkodierung ist über die Differenz der Phasenlage zwischen aufeinanderfolgenden Symbolen verwirklicht. Bei zweistufig differenzphasenmodulierten Datensignalen unterscheiden sich benachbarte Symbole des Datensignals jeweils um 0° oder um 180°(= n). Im unverzerrten Fall sind die Signalamplituden jedes Symbols gleich. In Fig. 1 ist das Datensignal DS aufgrund von nichtlinearen Wechselwirkungen entlang der Übertragungsstrecke gestört. Wie anhand der Skizze des Datensignals DS zu erkennen, weisen die einzelnen Symbole des Datensignals DS unterschiedlich hohe Signalamplituden auf. Die Phasen der einzelnen Symbole sind jetzt um einen Wert φ gestört, d.h. die Phasendifferenzen benachbarter Symbole betragen nicht mehr genau 0 oder π. Bei weiterer Ausbreitung des Datensignals können die Phasenfehler so groß werden, dass die korrekte Unterscheidung der einzelnen Symbole nicht mehr möglich ist.

Das derart in seiner Amplitude und Phase gestörte Datensignal DS wird einer Einheit zur Pegelnivellierung PN zugeführt, die dazu dient, die Amplitudenunterschiede zwischen den einzelnen Symbolen auszugleichen und auf einen Wert festzulegen. Dazu kann beispielsweise ein modifizierter nichtlinearer Faserschleifenspiegel verwendet werden, wie er aus dem im Stand der Technik genannten Dokument von Striegler et al. bekannt ist. Am Ausgang der Einheit zur Pegelnivellierung PN weisen alle Symbole des nivellierten Datensignals DSN gleiche Signalamplituden auf. Die Phasenlage und damit auch die Phasenfehler der einzelnen Symbole sind jedoch im Wesentlichen erhalten.

Das in seiner Amplitude korrigierte Datensignal DSN wird einem Splitter SP zugeführt, wo es in ein erstes Datensignal DS1 und in ein zweites Datensignal DS2 aufgespalten wird. Wird ein passiver 50:50 Splitter PS verwendet, so sind die Leistungspegel der Impulse jedes Datensignals halbiert. Kommt ein aktiver Splitter zum Einsatz, in dem ein verstärkendes Medium integriert ist, kann dieser so betrieben werden, dass an jedem der beiden Ausgänge des Splitters SP eine pegelgetreue Kopie des Eingangssignals vorliegt. Grundsätzlich sind die Ausgestaltung des Splitters SP und sein Aufteilungsverhältnis beliebig wählbar.

Das erste Datensignal DS1 wird einer Phasenfehlerermittlungseinheit EP zugeführt. Diese hat die Aufgabe, den Phasenfehler φ eines Symbols bezogen auf die ungestörten Phasendifferenzen benachbarter Symbole von 0 oder π zu bestimmen und für jedes Symbol k in einen optischen Pegel proportional zum Phasenfehler φk des Symbols umzusetzen. Dieser optische Pegel soll danach zur Korrektur der Phasenfehler des Datensignals unter Ausnutzung nichtlinearer Effekte wie der Kreuzphasenmodulation XPM oder der Selbstphasenmodulation SPM verwendet werden. Dazu ist die Einheit zur Phasenkorrektur KP vorgesehen. In KP wird das zweite Datensignal DS2 mittels des optischen Pegels eines Korrektursignals KS korrigiert.

Die Phasenfehlerermittlungseinheit EP muss derart ausgestaltet sein, dass eine definierte Konversion der Phase der Signalimpulse der einzelnen Symbole in eine Amplitude stattfindet. Unabhängig davon, ob eine Signalstörung vorliegt, soll die Einheit EP einen Grundpegel I₀ liefern, der vorzugsweise in der nachfolgenden Korrektureinheit KP zu einer π/2-Phasenverschiebung für alle Signalimpulse führt, so dass die Phasendifferenzen zwischen aufeinanderfolgenden Symbolen erhalten bleiben. Die Transmissionskennlinie der Einheit EP, d.h. die Abhängigkeit der transmittierten Intensität von der Phasendifferenz aufeinanderfolgender Symbole, sollte im Bereich um 0 oder π linear sein und für beide Bereiche die gleiche Steigung aufweisen. So bewirkt beispielsweise bei negativer Steigung S der Kennlinie ein Phasenfehler von +φk eines Symbols eine Transmissionsänderung von AI ∼ φk. Das Korrektursignal KS für ein Symbol k besitzt in diesem Fall den Pegel Ik = I0-|S|* φk. In der Phasenkorrektureinheit KP führt das derart erzeugte Korrektursignal aufgrund des Kerr-Effekts zu einer Phasenverschiebung, die proportional zur Intensität des Korrektursignals eines Symbols Ik ist. Da in diesem Beispiel die Intensität des Korrektursignals kleiner als der Grundpegel 10 ist, wird die Phase des zu korrigierenden Symbols k des zweiten Datensignals DS2 im Verhältnis zu einem fehlerfreien Symbol um - φk korrigiert.

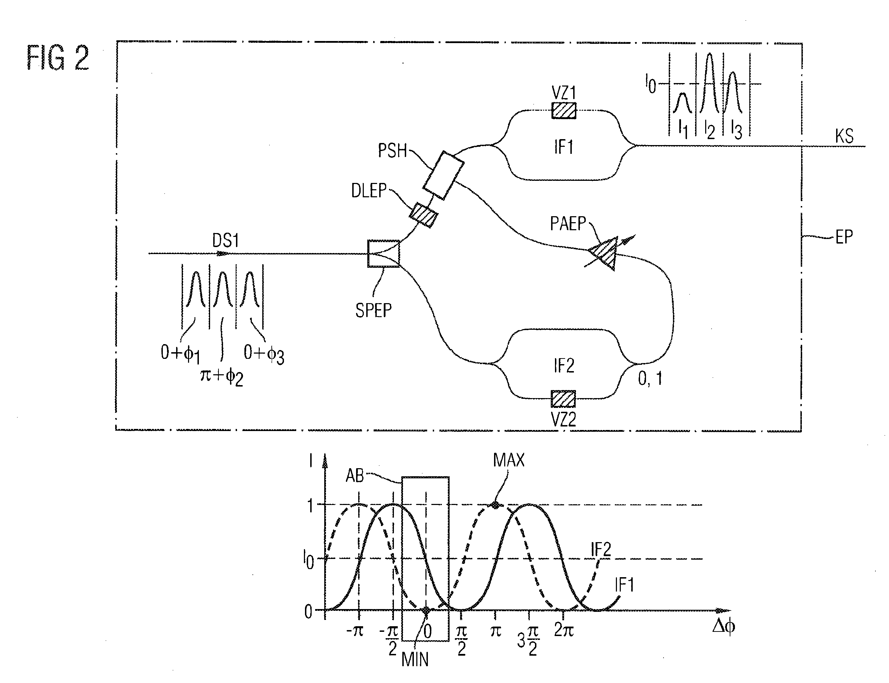

Zur Ermittlung der Phasenfehler kann beispielsweise eine interferometrische Anordnung eingesetzt werden. Eine Realisierungsvariante einer solchen Phasenfehlerermittlungseinheit ist anhand eines Blockschaltbilds in Fig. 2 angegeben. In dieser sind zwei parallel geschaltete Mach-Zehnder-Interferomter IF1 und IF2 vorgesehen, deren Arbeitspunkte um π/2 oder ein Vielfaches von π/2 (π/2+2nπ, mit n = 1,2,3 ...) gegeneinander verschoben sind. Die zugehörigen Kennlinien der Interferometer, d.h. die Transmission in Abhängigkeit von der Phasendifferenz benachbarter Symbole, sind unterhalb des Blockschaltbilds dargestellt.

Das erste Interferometer IF1 dient zur Ermittlung der Phasenfehler φ. Das zweite Interferometer IF2 dient zur Detektion der Symbolwerte 0 oder π. Beide Interferometer sind wie DPSK Demodulatoren ausgestaltet und unterscheiden sich nur in ihren Arbeitspunkten, d.h. der Arbeitspunkt des ersten Interferometers liegt bei der halben maximalen Transmission des zweiten Interferometers.

Das zweite Interferometer IF2 wird benötigt, um für alle Symbole den gleichen Arbeitsbereich AB im Interferometer IF1 einzustellen. Schließlich wird zur Einstellung der Phasenkorrektur eine lineare Kennlinie benötigt, welche sowohl für Symbole im Bereich um 0 als auch für Symbole im Bereich um π die gleiche Steigung aufweist. Dies wird hier dadurch erreicht, dass vor dem ersten Interferometer IF1 eine Einheit zur Phasenverschiebung PSH angeordnet ist. Diese verschiebt die Phase eines ankommenden Symbols genau um π, wenn im zweiten Interferometer IF2 für dieses Symbol beispielsweise das Symbol π detektiert wurde. Die Phasenfehler φ bleiben dabei erhalten. Sie werden nun stets im gleichen Arbeitsbereich AB des ersten Interferometers IF1 ermittelt und als optischer Pegel am Ausgang des ersten Interferometers IF1 abgegeben.

Das ankommende Datensignal DS1 wird am Eingang der Phasenfehlerermittlungseinheit EP in einem Splitter SPER aufgeteilt. Das erste Teilsignal wird der Verzögerungseinheit DLEP zugeführt. Die Verzögerungsdauer wird derart eingestellt, dass erst nach erfolgter Detektion des Symbolwertes im zweiten Interferometer IF2 das erste Teilsignal zum richtigen Zeitpunkt am Phasenschieber PSH anliegt. Laufzeitunterschiede, die durch den Signalweg des zweiten Teilsignals verursacht sind, werden somit mittels der Verzögerungseinheit DLEP ausgeglichen.

Das zweite Teilsignal wird dem zweiten Interferometer IF2 zugeführt. Dieses wird wie ein DPSK Demodulator betrieben. In einem der Interferometerarme ist eine Verzögerungseinheit VZ2 angeordnet, die eine Laufzeitdifferenz von grob einer Bitdauer bewirkt. Je nach Phasendifferenz zwischen den beiden Signalen in den Interferometerarmen tritt an den Ausgängen des Interferometers konstruktive oder destruktive Interferenz auf. Auf diese Weise liegt am Ausgang des Interferometers IF2 in Abhängigkeit von der Phasendifferenz aufeinanderfolgender Symbole von 0 oder π eine Transmission von 0 oder 1 an. Die Punkte maximaler Transmission MAX und minimaler Transmission MIN sind in der in Fig. 2 gestrichelt eingezeichneten Kennlinie IF2 markiert. Phasenfehler der einzelnen Symbole wirken sich nur geringfügig auf das Detektionsergebnis aus, da die Steigung der Kennlinie in den Minima und Maxima sehr flach ist.

Der Ausgang des zweiten Interferometers IF2 ist mit einem optisch steuerbaren Phasenschieber PSH verbunden, der beispielsweise als nichtlineares Medium ausgebildet sein kann und vor dem Eingang des ersten Interferometers IF1 angeordnet ist. Zuvor werden die am Ausgang von IF2 abgegebenen Pegel einer Pegelanpassung PAEP zugeführt. In dieser wird der Pegel im Bereich um die Transmission 1 auf einen zuvor fest definierten Wert gesetzt, der genau eine Phasenverschiebung von π bewirkt. Ein Einspegel führt demnach dazu, dass im Phasenschieber PSH das zugehörige Symbol des ersten Teilsignals in der Phase um π verschoben wird. Die Phasenverschiebung kann ebenfalls durch einen nichtlinearen Effekt wie die XPM erreicht werden. Die Ausgestaltung des optisch steuerbaren Phasenschiebers PSH ist frei wählbar. Entscheidend ist, dass eine möglichst genaue Phasenverschiebung um π stattfindet. Alternativ kann der optisch steuerbare Phasenschieber PSH auch in einem der Interferometerarme des ersten Interferometers IF1 angeordnet sein. In diesem Fall wird der Arbeitspunkt des Interferometers IF1 für einen festen Symbolwert um π verschoben. Bildlich gesprochen kann man sich diese Phasenverschiebung in Fig. 2 als Verschiebung der durchgezogenen Kennlinie IF2 vorstellen, sodass sowohl eine logische Null (Symbol 0) oder logische Eins (Symbol π) beide auf einer abfallenden oder aufsteigenden Flanke der Transmissionskennlinie liegen.

Ist der optisch steuerbare Phasenschieber PSH vor dem Eingang des Interferometers IF1 angeordnet, so kann das erste Interferometer IF1 vorteilhaft genauso ausgestaltet sein wie das zweite Interferometer IF2. Im ersten Interferometer IF1 wird nun für jedes Symbol k ein zu seinem Phasenfehler φk proportionaler optischer Pegel Ik ermittelt.

Die in Fig. 2 dargestellte Realisierungsvariante einer Phasenfehlerermittlungseinheit kann integriert-optisch beispielsweise auf InP-Basis hergestellt werden. Auch andere Materialien wie Silizium, Glas oder Lithiumniobat sind denkbar. Prinzipiell ist auch eine Erweiterung der hier beschriebenen Phasenfehlerermittlungseinheit für vierstufig differenzphasenmodulierte Datensignale denkbar. Dazu ist ein drittes Interferometer IF3 notwendig, das mit dem zweiten Interferometer parallel geschaltet ist. Wird der Ausgangspegel des dritten Interferometers IF3 verdoppelt, .so ist eine Ermittlung von vier Symbolen gegeben. Der Interferometerausgang des zweiten und des dritten Interferometers können mit einem Phasenschieber verbunden werden. In Abhängigkeit der ermittelten Symbole sind mindestens zwei Phasenschieber notwendig, um für die einzelnen Symbole die gleiche Wirkungsweise des ersten Interferometers IF1 zu gewährleisten.

Das am Ausgang von EP abgegebene Korrektursignal KS weist nun Impulse auf, deren Amplitude in Abhängigkeit von den Phasenfehlern φk jedes einzelnen Symbols k um einen konstanten Pegel 10 variieren. Das Korrektursignal KS wird einer Einheit zur Phasenkorrektur KP zugeführt, die in dem in Fig.1 dargestellten Ausführungsbeispiel aus einem Halbleiterverstärker SOA und einem nachfolgenden Zirkulator Z besteht. Am Eingang E des Zirkulators liegt das Korrektursignal KS an. Dieses wird zum ersten Ausgang A1 geleitet und dem Halbleiterverstärker SOA zugeführt. Der Halbleiterverstärker SOA wird im linearen Bereich mit konstantem Gewinn betrieben, sodass durch das Korrektursignal der Gewinn nicht geändert wird. Das Korrektursignal KS durchläuft den SOA in Gegenrichtung zum zweiten Datensignal DS2. Über die Kreuzphasenmodulation XPM wird wie bereits weiter oben beschrieben jedes Symbol des zweiten Datensignals DS2 in Abhängigkeit vom Pegel des Korrektursignals des gleichen Symbols in seiner Phase verschoben. Nach der Skizze in Fig. 1 erfolgt die Phasenverschiebung des ersten Symbols (0+φ1) beispielsweise proportional zur Intensität des Korrektursignals I1 im Verhältnis zu einem fehlerfreien Symbol um - φ1 (da I1<I0). Das zweite Symbol (π+φ2) wird um + φ2 korrigiert (da I2>I0), das dritte Symbol (0+φ3) wird um ebenfalls um + φ3 korrigiert (da I3>I0).

Am Ausgang der Einheit zur Phasenkorrektur KP wird ein sowohl in Amplitude als auch in Phase korrigiertes Datensignal DSK abgegeben. Die Amplitudenpegel aller Symbole sind gleich und zwischen jedem benachbarten Symbol besteht eine Phasendifferenz von 0 oder π.

Um Laufzeitunterschiede zwischen dem ersten Datensignal DS1 und zweiten Datensignal DS2 anzupassen, ist vor der Einheit zur Phasenkorrektur KP eine Verzögerungsleitung DL eingefügt. Des Weiteren kann zur mittleren Verstärkung des Korrektursignals KS ein regelbarer Verstärker eingesetzt werden. Eine Pegelanpassung ist vorteilhaft, da innerhalb des SOA ein nichtlinearer Effekt (hier die XPM) ausgenutzt wird, dessen Effizienz mit der Intensität oder dem Pegel des Korrektursignals KS ansteigt.

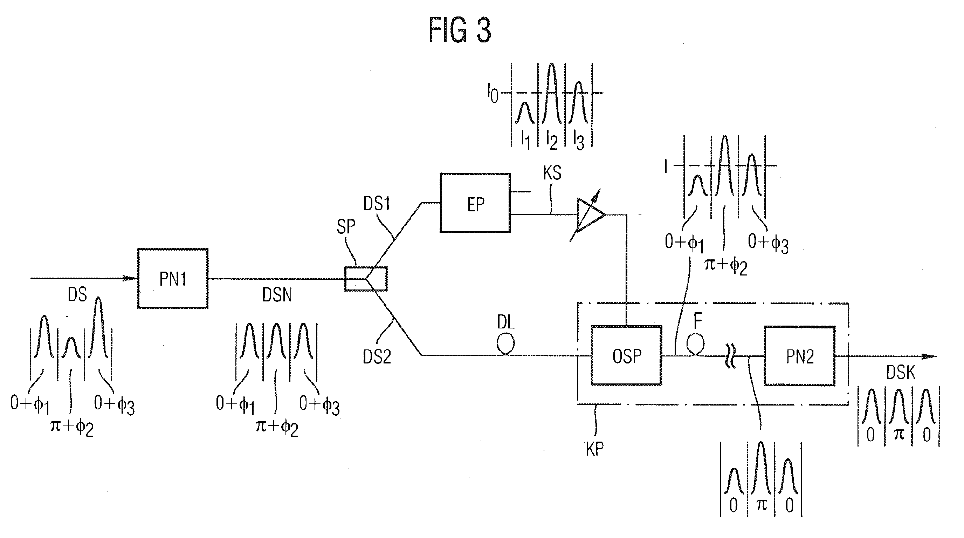

In Fig. 3 ist eine zweite Ausführungsvariante des erfindungsgemäßen optischen Regenerators gezeigt. Hier umfasst die Einheit zur Phasenkorrektur KP eine Serienschaltung aus einer optisch steuerbaren Pegeleinstellung OSP, einer Übertragungsfaser F und einer zweiten Einheit zur Pegelnivellierung PN2. Das Korrektursignal KS wird hier dazu verwendet, um dem zweiten Datensignal DS2 Pegelunterschiede aufzuprägen, die proportional zum Phasenfehler φ sind. Dazu wird eine optisch steuerbare Pegeleinstellung OSP verwendet. Es kann sich dabei entweder um einen optisch steuerbaren Verstärker oder Abschwächer handeln. Am Ausgang der steuerbaren Pegeleinstellung OSP liegt das zweite Datensignal DS2 an, dessen Signalamplituden in Abhängigkeit von den Phasenfehlern φk jedes einzelnen Symbols k um einen mittleren konstanten Pegel I variieren. Die eigentliche Phasenkorrektur findet in der anschließenden Übertragungsfaser F statt. Im Gegensatz zur Ausführungsvariante aus Fig. 1 wird hier nicht die Kreuzphasenmodulation XPM zur Phasenkorrektur ausgenutzt sondern die Selbstphasenmodulation SPM in der Faser F. Die Übertragungsfaser kann auch als hochnichtlineare Faser ausgestaltet sein oder es kann sich um eine Übertragungsfaser der Übertragungsstrecke handeln. Am Ausgang der Faser sind die Phasenfehler jedes einzelnen Symbols aufgrund der nichtlinearen Phasenverschiebung innerhalb der Faser beseitigt. Da die unterschiedlichen Signalamplituden der Symbole durch die SPM nicht beeinflusst werden, kann eine Ausgleichung der Pegelunterschiede der einzelnen Symbole beispielsweise vor einer nachfolgenden Empfangseinheit in einer zweiten Einheit zur Pegelnivellierung PN2 durchgeführt werden.

Zur Phasenkorrektur kann alternativ zur Übertragungsfaser F auch ein Halbleiterverstärker SOA verwendet werden. Änderungen der Ladungsträgerdichte im Halbleiterverstärker führen im SOA zu Änderungen des Brechungsindex. Dadurch kann in Abhängigkeit von der Intensität eines Signalimpulses ebenfalls eine Phasenverschiebung eines Symbols erfolgen, was hier zur Phasenkorrektur ausgenutzt wird.

Abschließend wird bemerkt, dass die erfindungsgemäße Phasenfehlerermittlungseinheit neben einer Anwendung in dem erfindungsgemäßen optischen Regenerator auch für andere Zwecke nutzbar ist. Sie kann beispielsweise als Detektor für Signalverzerrungen entweder in eine Regelung eingebaut werden oder zur Signalanalyse zum Beispiel in Verbindung mit einem Dispersionskompensator eingesetzt werden. Des Weiteren ist ein Einsatz als Detektor für zusätzliche (analoge oder digitale) Information, die als Submodulation dem Datensignal aufgeprägt wurde, denkbar.

## Patentansprüche

1. Optischer Regenerator
für ein differenzphasenmoduliertes Datensignal (DS), eingangsseitig umfassend eine Einheit zur bitweisen Pegelnivellierung (PN, PN1), in der für jedes Symbol des differenzphasenmodulierten Datensignals (DS) eine gleiche Amplitude eingestellt wird,
**dadurch gekennzeichnet,**
**dass** sich an die Einheit zur Pegelnivellierung (PN) ein Splitter (SP) mit zwei Ausgängen anschließt, in dem das in seiner Amplitude eingestellte Datensignal (DS) in ein erstes Datensignal (DS1) aufgeteilt wird, das an einem ersten Ausgang abgegeben wird und in ein zweites Datensignal (DS2) aufgeteilt wird, das an einem zweiten Ausgang abgegeben wird, dass der erste Ausgang des Splitters mit einer Phasenfehlerermittlungseinheit (EP) verbunden ist, in der in Abhängigkeit von einer Phasenfehler des zugeführten ersten Datensignals (DS1) ein Korrektursignal (KS) erzeugt und an ihrem Ausgang abgegeben wird,
**dass** der Ausgang der Phasenfehlerermittlungseinheit (EP) mit einem ersten Eingang einer Einheit zur Korrektur der Phasenfehler (KP) verbunden ist, deren zweiter Eingang mit dem zweiten Ausgang des Splitters (SP) verbunden ist, so dass in der Einheit zur Korrektur der Phasenfehler (KP) das zweite Datensignal (DS2) in Abhängigkeit von dem zugeführten Korrektursignal (KS) in seiner Phase korrigiert wird und an ihrem Ausgang ein in seiner Amplitude und in seiner Phase regeneriertes differenzphasenmoduliertes Datensignal (DSK) abgegeben wird.

2. Optischer Regenerator nach Anspruch 1,
**dadurch gekennzeichnet,**
**dass** die Phasenfehlerermittlungseinheit (EP) eine einen Zusammenhang zwischen einem Phasenwert und einem Amplitudenwert darstellende Kennlinie mit mindestens einem linearen Bereich aufweist, so dass für unterschiedliche Symbole des Datensignals (DS) eine gleiche Steigung der Kennlinie gegeben ist.

3. Optischer Regenerator nach Anspruch 2,
**dadurch gekennzeichnet,**
**dass** die Phasenfehlerermittlungseinheit (EP) als interferometrische Anordnung ausgebildet ist.

4. Optischer Regenerator nach Anspruch 3,
**dadurch gekennzeichnet,**
**dass** die Phasenfehlerermittlungseinheit (EP) als Parallelschaltung aus einem ersten Interferometer (IF1) mit einem optisch steuerbaren Phasenschieber (PSH) und einem in seiner Kennlinie um eine Phasendifferenz verschobenen zweiten Interferometer (IF2) ausgebildet ist,
wobei dem Eingang des ersten Interferometers (IF1) eine Verzögerungseinheit (DLEP) vorgeschaltet ist, und
der Ausgang des zweiten Interferometers (IF2) über eine Pegeleinstellung (PAEP) mit dem optisch steuerbaren Phasenschieber (PSH) verbunden ist.

5. Optischer Regenerator nach Anspruch 4,
**dadurch gekennzeichnet,**
**dass** der optisch steuerbare Phasenschieber (PSH) zwischen die Verzögerungseinheit (DLEP) und den Eingang des ersten Interferometers (IF1) geschaltet ist.

6. Optischer Regenerator nach Anspruch 4,
**dadurch gekennzeichnet,**
**dass** der optisch steuerbare Phasenschieber (PSH) in einem Interferometerarm des ersten Interferometers (IF1) angeordnet ist.

7. Optischer Regenerator nach Anspruch 4,
**dadurch gekennzeichnet,**
**dass** das erste Interferometer (IF1) und das zweite Interferometer (IF2) als Zweistrahlinterferometer ausgebildet sind, die in Abhängigkeit von der Phasendifferenz zwischen den Signalen in den beiden Interferometerarmen jeweils einen Amplitudenwert abgeben.

8. Optischer Regenerator nach Anspruch 1,
**dadurch gekennzeichnet,**
**dass** die Einheit zur Korrektur der Phasenfehler (KP) ein optisch nichtlineares Medium enthält, in dem in Abhängigkeit von der Amplitude des Korrektursignals (KS) die Phase des zweiten Datensignals (DS2) eingestellt wird.

9. Optischer Regenerator nach Anspruch 8,
**dadurch gekennzeichnet,**
**dass** die Einheit zur Korrektur der Phasenfehler (KP) als Serienschaltung aus einem Halbleiterverstärker (SOA) mit nachfolgendem Zirkulator (Z) ausgebildet ist, wobei der Halbleiterverstärker (SOA) einen Eingang für das zweite Datensignal (DS2) aufweist und der Zirkulator (Z) einen Eingang (E) für das Korrektursignal (KS), einen ersten Ausgang (A1) für das Korrektursignal (KS) und einen zweiten Ausgang (A2) für das regenerierte Datensignal (DSK) aufweist.

10. Optischer Regenerator nach Anspruch 8,
**dadurch gekennzeichnet,**
**dass** die Einheit zur Korrektur der Phasenfehler (KP) als Serienschaltung aus einer optisch steuerbaren Pegeleinstellung (OSP) mit nachfolgendem optisch nichtlinearen Medium (F) ausgebildet ist, wobei die optisch steuerbare Pegeleinstellung (OSP) einen ersten Eingang für das Korrektursignal (KS) aufweist und einen zweiten Eingang für das zweite Datensignal (DS2) aufweist.

11. Optischer Regenerator nach Anspruch 10,
**dadurch gekennzeichnet,**
**dass** das optisch nichtlineare Medium (F) als Übertragungsfaser oder als Halbleiterverstärker ausgebildet ist.

12. Optischer Regenerator nach Anspruch 10,
**dadurch gekennzeichnet,**
**dass** im Anschluss an das optisch nichtlineare Medium (F) eine zweite Einheit zur Pegelnivellierung (PN2) vorgesehen ist.

13. Optischer Regenerator nach einem der vorhergehenden Ansprüche,
**dadurch gekennzeichnet,**
**dass** im Signalweg Einheiten zur Signalverzögerung oder Laufzeiteinstellung vorgesehen sind.

14. Optischer Regenerator nach einem der vorhergehenden Ansprüche,
**dadurch gekennzeichnet,**
**dass** die Einheit zur bitweisen Pegelnivellierung (PN, PN1) als nichtlineares Faserschleifeninterferometer mit eingefügtem Richtungsabschwächer ausgebildet ist.

15. Phasenfehlerermittlungseinheit (EP) für einen optischen Regenerator nach einem der Ansprüche 1 bis 14,
**dadurch gekennzeichnet,**
**dass** ein Splitter (SPEP) mit zwei Ausgängen vorgesehen ist, dass der erste Ausgang des Splitters (SPEP) mit einem Eingang einer interferometrischen Anordnung aufweisend eine Verzögerungseinheit (DLEP), einen optisch steuerbaren Phasenschieber (PSH) und ein erstes Interferometer (IF1) verbunden ist,
**dass** der zweite Ausgang des Splitters (SPEP) an einen Eingang eines zweiten Interferometers (IF2) angeschlossen ist, und dass ein Ausgang des zweiten Interferometers (IF2) über eine Pegeleinstellung (PAEP) mit dem optisch steuerbaren Phasenschieber (PSH) verbunden ist.

16. Phasenfehlerermittlungseinheit (EP) nach Anspruch 15,
**dadurch gekennzeichnet,**
**dass** der optisch steuerbare Phasenschieber (PSH) derart ausgebildet ist, dass in Abhängigkeit von dem am Ausgang des zweiten Interferometers (IF2) vorliegenden Transmissionswert eine Phasenverschiebung um π bewirkt wird.

17. Phasenfehlerermittlungseinheit (EP) nach Anspruch 15 oder 16,
**dadurch gekennzeichnet,**
**dass** das erste Interferometer (IF1) derart ausgebildet ist, dass eine einen Zusammenhang zwischen Phase und Transmission darstellende Kennlinie des ersten Interferometers (IF1) um eine Phasendifferenz von π/2 modulo 2π gegenüber einer entsprechenden Kennlinie des zweiten Interferometers (IF2) verschoben ist.

18. Phasenfehlerermittlungseinheit (EP) nach Anspruch 15 bis 17,
**dadurch gekennzeichnet,**
**dass** der optisch steuerbare Phasenschieber (PSH) in einem Interferometerarm des ersten Interferometers (IF1) angeordnet ist.

19. Phasenfehlerermittlungseinheit (EP) nach Anspruch 15 bis 17,
**dadurch gekennzeichnet,**
**dass** der optisch steuerbare Phasenschieber (PSH) vor dem Eingang des ersten Interferometers (IF1) angeordnet ist.

20. Phasenfehlerermittlungseinheit (EP) nach Anspruch 15 bis 19,
**dadurch gekennzeichnet,**
**dass** das erste Interferometer (IF1) und das zweite Interferometer (IF2) als Zweistrahlinterferometer ausgebildet sind, die in Abhängigkeit von der Phasendifferenz zwischen den Signalen in den beiden Interferometerarmen jeweils einen Amplitudenwert abgeben.

21. Verfahren zur optischen Regeneration eines differenzphasenmodulierten Datensignals (DS) bei dem das Datensignal (DS) in eine Einheit zur bitweisen Pegelnivellierung (PN) eingespeist wird und bei dem in dieser Einheit für jedes Symbol des differenzphasenmodulierten Datensignals (DS) eine gleiche Amplitude eingestellt wird,
**dadurch gekennzeichnet,**
**dass** das Datensignal (DS) mittels eines Splitters (SP) in ein erstes (DS1) und ein zweites Datensignal (DS2) aufgeteilt wird,
**dass** das erste Datensignal (DS1) einer Phasenfehlerermittlungseinheit (EP) zugeführt wird, die in Abhängigkeit vom Phasenfehler des zugeführten ersten Datensignals (DS1) ein Korrektursignal (KS) erzeugt,
**dass** das Korrektursignal einer Einheit zur Korrektur des Phasenfehlers (KP) zugeführt wird,
**dass** das zweite Datensignal (DS2) der Einheit zur Korrektur des Phasenfehlers (KP) zugeführt wird und
**dass** das Datensignal (DS2) in Abhängigkeit vom Korrektursignal (KS) in seiner Phase korrigiert wird und
**dass** am Ausgang der Einheit (KP) ein in seiner Amplitude und in seiner Phase regeneriertes differenzphasenmoduliertes Datensignal (DSK) abgegeben wird.

## Claims

1. Optical regenerator
for a differential phase shift keyed data signal (DS),
whose input side comprises a unit for bit-by-bit level control (PN, PN1) in which the same amplitude is set for each symbol of the differential phase shift keyed data signal (DS), **characterized**
**in that** the unit for level control (PN) is followed by a splitter (SP) having two outputs, in which the data signal (DS) whose amplitude has been set is split into a first data signal (DS1), which is output at a first output, and is split into a second data signal (DS2), which is output at a second output, in that the first output of the splitter is connected to a phase error ascertainment unit (EP) in which a phase error in the supplied first data signal (DS1) is taken as a basis for producing a correction signal (KS) and outputting it at its output,
**in that** the output of the phase error ascertainment unit (EP) is connected to a first input of a unit for correcting the phase errors (KP), the second input of which is connected to the second output of the splitter (SP), so that the unit for correcting the phase errors (KP) corrects the phase of the second data signal (DS2) on the basis of the supplied correction signal (KS) and its output outputs a differential phase shift keyed data signal (DSK) whose amplitude and whose phase have been regenerated.

2. Optical regenerator according to Claim 1,
**characterized**
**in that** the phase error ascertainment unit (EP) has a characteristic curve which represents a correlation between a phase value and an amplitude value and which has at least one linear range, so that for different symbols of the data signal (DS) there is the same gradient of the characteristic curve.

3. Optical regenerator according to Claim 2,
**characterized**
**in that** the phase error ascertainment unit (EP) is in the form of an interferometric arrangement.

4. Optical regenerator according to Claim 3,
**characterized**
**in that** the phase error ascertainment unit (EP) is in the form of a parallel circuit comprising a first interferometer (IF1) with an optically controllable phase shifter (PSH) and a second interferometer (IF2) whose characteristic curve has been shifted by a phase difference,
wherein the input of the first interferometer (IF1) has a delay unit (DLEP) connected upstream of it, and
the output of the second interferometer (IF2) is connected to the optically controllable phase shifter (PSH) via a level adjuster (PAEP) .

5. Optical regenerator according to Claim 4,
**characterized**
**in that** the optically controllable phase shifter (PSH) is connected between the delay unit (DLEP) and the input of the first interferometer (IF1).

6. Optical regenerator according to Claim 4,
**characterized**
**in that** the optically controllable phase shifter (PSH) is arranged in one interferometer arm of the first interferometer (IF1).

7. Optical regenerator according to Claim 4,
**characterized**
**in that** the first interferometer (IF1) and the second interferometer (IF2) are in the form of two-beam interferometers which take the phase difference between the signals in the two interferometer arms as a basis for outputting a respective amplitude value.

8. Optical regenerator according to Claim 1,
**characterized**
**in that** the unit for correcting the phase errors (KP) contains an optically nonlinear medium in which the amplitude of the correction signal (KS) is taken as a basis for setting the phase of the second data signal (DS2).

9. Optical regenerator according to Claim 8,
**characterized**
**in that** the unit for correcting the phase errors (KP) is in the form of a series circuit comprising a semiconductor amplifier (SOA) with a downstream circulator (Z), wherein the semiconductor amplifier (SOA) has an input for the second data signal (DS2), and the circulator (Z) has an input (E) for the correction signal (KS), a first output (A1) for the correction signal (KS) and a second output (A2) for the regenerated data signal (DSK).

10. Optical regenerator according to Claim 8,
**characterized**
**in that** the unit for correcting the phase errors (KP) is in the form of a series circuit comprising an optically controllable level adjuster (OSP) with a downstream optically nonlinear medium (F), wherein the optically controllable level adjuster (OSP) has a first input for the correction signal (KS) and a second input for the second data signal (DS2).

11. Optical regenerator according to Claim 10,
**characterized**
**in that** the optically nonlinear medium (F) is in the form of a transmission fiber or in the form of a semiconductor amplifier.

12. Optical regenerator according to Claim 10,
**characterized**
**in that** the optically nonlinear medium (F) is followed by a second unit for level control (PN2).

13. Optical regenerator according to one of the preceding claims,
**characterized**
**in that** the signal path contains units for signal delay or propagation time setting.

14. Optical regenerator according to one of the preceding claims,
**characterized**
**in that** the unit for bit-by-bit level control (PN, PN1) is in the form of a nonlinear loop interferometer with an inserted directional attenuator.

15. Phase error ascertainment unit (EP) for an optical regenerator according to one of Claims 1 to 14,
**characterized**
**in that** a splitter (SPEP) having two outputs is provided,
**in that** the first output of the splitter (SPEP) is connected to an input of an interferometric arrangement having a delay unit (DLEP), an optically controllable phase shifter (PSH) and a first interferometer (IF1),
**in that** the second output of the splitter (SPEP) is connected to an input of a second interferometer (IF2), and
**in that** an output of the second interferometer (IF2) is connected to the optically controllable phase shifter (PSH) via a level adjuster (PAEP).

16. Phase error ascertainment unit (EP) according to Claim 15,
**characterized**
**in that** the optically controllable phase shifter (PSH) is in a form such that the transmission value which is present at the output of the second interferometer (IF2) is taken as a basis for effecting a phase shift by π.

17. Phase error ascertainment unit (EP) according to Claim 15 or 16,
**characterized**
**in that** the first interferometer (IF1) is in a form such that a characteristic curve for the first interferometer (IF1), which characteristic curve represents a correlation between phase and transmission, is shifted by a phase difference of π/2 modulo 2π in comparison with a corresponding characteristic curve for the second interferometer (IF2).

18. Phase error ascertainment unit (EP) according to Claims 15 to 17,
**characterized**
**in that** the optically controllable phase shifter (PSH) is arranged in one interferometer arm of the first interferometer (IF1).

19. Phase error ascertainment unit (EP) according to Claims 15 to 17,
**characterized**
**in that** the optically controllable phase shifter (PSH) is arranged upstream of the input of the first interferometer (IF1).

20. Phase error ascertainment unit (EP) according to Claims 15 to 19,
**characterized**
**in that** the first interferometer (IF1) and the second interferometer (IF2) are in the form of two-beam interferometers which take the phase difference between the signals in the two interferometer arms as a basis for outputting a respective amplitude value.

21. Method for the optical regeneration of a differential phase shift keyed data signal (DS) in which the data signal (DS) is fed to a unit for bit-by-bit level control (PN) and in which the same amplitude is set in this unit for each symbol of the differential phase shift keyed data signal (DS), **characterized**
**in that** the data signal (DS) is split into a first (DS1) and a second (DS2) data signal by means of a splitter (SP),
**in that** the first data signal (DS1) is supplied to a phase error ascertainment unit (EP) which takes the phase error in the supplied first data signal (DS1) as a basis for producing a correction signal (KS),
**in that** the correction signal is supplied to a unit for correcting the phase error (KP),
**in that** the second data signal (DS2) is supplied to the unit for correcting the phase error (KP) and
**in that** the data signal (DS2) has its phase corrected on the basis of the correction signal (KS), and
**in that** the output of the unit (KP) outputs a differential phase shift keyed data signal (DSK) whose amplitude and whose phase have been regenerated.

## Revendications

1. Régénérateur optique pour un signal de données (DS) à modulation de phase différentielle comprenant, côté entrée, une unité de nivellement bit par bit (PN, PN1) dans laquelle une même amplitude est réglée pour chaque symbole du signal de données (DS) à modulation de phase différentielle, **caractérisé en ce que**:
- à l'unité de nivellement (PN) se connecte un séparateur (SP) avec deux sorties dans lequel le signal de données (DS) réglé en amplitude est divisé en un premier signal de données (DS1) qui est délivré au niveau d'une première sortie et un deuxième signal de données (DS2) qui est délivré au niveau d'une deuxième sortie ;
- la première sortie du séparateur est reliée à une unité de détection d'erreur de phase (EP) dans laquelle un signal de correction (KS) est généré en fonction d'une erreur de phase du premier signal de données amené (DS1) et est délivré au niveau de sa sortie ;
- la sortie de l'unité de détection d'erreur de phase (EP) est reliée à une première entrée d'une unité de correction des erreurs de phase (KP) dont la deuxième entrée est reliée à la deuxième sortie du séparateur (SP), de sorte que, dans l'unité de correction des erreurs de phase (KP), le deuxième signal de données (DS2) est corrigé en phase en fonction du signal de correction amené (KS) et un signal de données à modulation de phase différentielle régénéré en amplitude et en phase (DSK) est délivré au niveau de sa sortie.

2. Régénérateur optique selon la revendication 1, **caractérisé en ce que** l'unité de détection d'erreur de phase (EP) présente une courbe caractéristique représentant un rapport entre une valeur de phase et une valeur d'amplitude, avec au moins une zone linéaire, de sorte qu'on a une même pente de la courbe caractéristique pour des symboles différents du signal de données (DS).

3. Régénérateur optique selon la revendication 2, **caractérisé en ce que** l'unité de détection d'erreur de phase (EP) est réalisée sous la forme d'un agencement interférométrique.

4. Régénérateur optique selon la revendication 3, **caractérisé en ce que** l'unité de détection d'erreur de phase (EP) est réalisée sous la forme d'un montage en parallèle constitué d'un premier interféromètre (IF1) avec un déphaseur à commande optique (PSH) et d'un deuxième interféromètre (IF2) dont la courbe caractéristique est déphasée, une unité de retard (DLEP) étant montée en amont de l'entrée du premier interféromètre (IF1) et la sortie du deuxième interféromètre (IF2) étant reliée au déphaseur à commande optique (PSH) via un réglage de niveau (PAEP).

5. Régénérateur optique selon la revendication 4, **caractérisé en ce que** le déphaseur à commande optique (PSH) est monté entre l'unité de retard (DLEP) et l'entrée du premier interféromètre (IF1).

6. Régénérateur optique selon la revendication 4, **caractérisé en ce que** le déphaseur à commande optique (PSH) est situé dans un bras du premier interféromètre (IF1).

7. Régénérateur optique selon la revendication 4, **caractérisé en ce que** le premier interféromètre (IF1) et le deuxième interféromètre (IF2) sont réalisés sous la forme d'interféromètres à deux faisceaux qui délivrent respectivement une valeur d'amplitude en fonction de la différence de phase entre les signaux dans les deux bras d'interféromètre.

8. Régénérateur optique selon la revendication 1, **caractérisé en ce que** l'unité de correction des erreurs de phase (KP) contient un milieu optiquement non linéaire dans lequel la phase du deuxième signal de données (DS2) est réglée en fonction de l'amplitude du signal de correction (KS).

9. Régénérateur optique selon la revendication 8, **caractérisé en ce que** l'unité de correction des erreurs de phase (KP) est réalisée sous la forme d'un montage en série constitué d'un amplificateur à semi-conducteur (SOA) avec un circulateur en aval (Z), l'amplificateur à semi-conducteur (SOA) comportant une entrée pour le deuxième signal de données (DS2) et le circulateur (Z) comportant une entrée (E) pour le signal de correction (KS), une première sortie (A1) pour le signal de correction (KS) et une deuxième sortie (A2) pour le signal de données régénéré (DSK).

10. Régénérateur optique selon la revendication 8, **caractérisé en ce que** l'unité de correction des erreurs de phase (KP) est réalisée sous la forme d'un montage en série constitué d'un réglage de niveau à commande optique (OSP) avec un milieu optiquement non linéaire (F) en aval, le réglage de niveau à commande optique (OSP) comportant une première entrée pour le signal de correction (KS) et une deuxième entrée pour le deuxième signal de données (DS2).

11. Régénérateur optique selon la revendication 10, **caractérisé en ce que** le milieu optiquement non linéaire (F) se présente sous la forme d'une fibre de transmission ou d'un amplificateur à semi-conducteur.

12. Régénérateur optique selon la revendication 10, **caractérisé en ce qu'**est prévue, à la suite du milieu optiquement non linéaire (F), une deuxième unité de nivellement (PN2).

13. Régénérateur optique selon l'une des revendications précédentes, **caractérisé en ce que** sont prévues, dans le chemin des signaux, des unités pour retarder les signaux ou pour régler le temps de propagation.

14. Régénérateur optique selon l'une des revendications précédentes, **caractérisé en ce que** l'unité de nivellement bit par bit (PN, PN1) est réalisée sous la forme d'un interféromètre non linéaire à boucle de fibre avec affaiblisseur directionnel intégré.

15. Unité de détection d'erreur de phase (EP) pour un régénérateur optique selon l'une des revendications 1 à 14, **caractérisée en ce qu'**est prévu un séparateur (SPEP) avec deux sorties, **en ce que** la première sortie du séparateur (SPEP) est reliée à une entrée d'un agencement interférométrique comportant une unité de retard (DLEP), un déphaseur à commande optique (PSH) et un premier interféromètre (IF1), **en ce que** la deuxième sortie du séparateur (SPEP) est raccordée à une entrée d'un deuxième interféromètre (IF2) et **en ce qu'**une sortie du deuxième interféromètre (IF2) est reliée au déphaseur à commande optique (PSH) via un réglage de niveau (PAEP).

16. Unité de détection d'erreur de phase (EP) selon la revendication 15, **caractérisée en ce que** le déphaseur à commande optique (PSH) est réalisé de manière telle qu'un déphasage de π est provoqué en fonction de la valeur de transmission donnée à la sortie du deuxième interféromètre (IF2).

17. Unité de détection d'erreur de phase (EP) selon la revendication 15 ou 16, **caractérisée en ce que** le premier interféromètre (IF1) est réalisé de manière telle qu'une courbe caractéristique du premier interféromètre (IF1) représentant un rapport entre la phase et la transmission est déphasée de π/2 modulo 2π par rapport à une courbe caractéristique correspondante du deuxième interféromètre (IF2).

18. Unité de détection d'erreur de phase (EP) selon la revendication 15 à 17, **caractérisée en ce que** le déphaseur à commande optique (PSH) est situé dans un bras du premier interféromètre (IF1).

19. Unité de détection d'erreur de phase (EP) selon la revendication 15 à 17, **caractérisée en ce que** le déphaseur à commande optique (PSH) est situé en amont de l'entrée du premier interféromètre (IF1).

20. Unité de détection d'erreur de phase (EP) selon la revendication 15 à 19, **caractérisée en ce que** le premier interféromètre (IF1) et le deuxième interféromètre (IF2) sont réalisés sous la forme d'interféromètres à deux faisceaux qui délivrent respectivement une valeur d'amplitude en fonction de la différence de phase entre les signaux dans les deux bras d'interféromètre.

21. Procédé de régénération optique d'un signal de données (DS) à modulation de phase différentielle, selon lequel le signal de données (DS) est injecté dans une unité de nivellement bit par bit (PN) et selon lequel est réglée, dans cette unité, une même amplitude pour chaque symbole du signal de données (DS) à modulation de phase différentielle, **caractérisé en ce que**:
- le signal de données (DS) est divisé en un premier (DS1) et en un deuxième signal de données (DS2) au moyen d'un séparateur (SP) ;
- le premier signal de données (DS1) est envoyé sur une unité de détection d'erreur de phase (EP) qui génère un signal de correction (KS) en fonction de l'erreur de phase du premier signal de données amené (DS1) ;
- le signal de correction est envoyé sur une unité de correction de l'erreur de phase (KP) ;
- le deuxième signal de données (DS2) est envoyé sur l'unité de correction de l'erreur de phase (KP) ; et
- le signal de données (DS2) est corrigé en phase en fonction du signal de correction (KS) ; et
- un signal de données à modulation de phase différentielle régénéré en amplitude et en phase (DSK) est délivré à la sortie de l'unité (KP).
